# EUROPEAN PATENT APPLICATION

(11) **EP 2 902 442 A1**
(43) Date of publication of application: **05.08.2015**
(21) Application number: 13840670.7
(22) Date of filing: 25.09.2013
(51) Int. Cl.: C08L 67/03, C08K 5/00, C08K 5/3415

(54) **HEAT-CURABLE LIQUID-CRYSTAL POLYESTER COMPOSITION AND CURED PRODUCT THEREOF**

(30) Priority: 28.09.2012 JP 2012217635; 07.11.2012 JP 2012245771
(71) Applicant: Daicel Corporation, Osaka-shi, Osaka 530-0001 (JP); Polyplastics Co., Ltd., Tokyo 108-8280 (JP)
(72) Inventor: NAKATANI, Kohji, Himeji-shi Hyogo 671-1283 (JP); HASHIZUME, Yoko, Himeji-shi Hyogo 671-1283 (JP); SAKAMOTO, Katsutoshi, Fuji-shi Shizuoka 416-8533 (JP); TAGUCHI, Yoshiaki, Fuji-shi Shizuoka 416-8533 (JP)
(74) Representative: Grünecker Patent- und Rechtsanwälte PartG mbB
(86) International application number: PCT/JP2013/075818
(87) International publication number: WO 2014/050850

(57) **Abstract**

Provided is a thermosetting composition that can be cured at a relatively low temperature and gives a cured product having excellent heat resistance.

The thermosetting composition according to the present invention is a thermosetting liquid-crystal polyester composition prepared by melt-blending a liquid-crystal polyester (A) and a compound (B) with each other. The liquid-crystal polyester (A) includes at least one of hydroxy and acyloxy at molecular chain end. The compound (B) includes a first functional group and a second functional group in molecule. The first functional group is reactive with the at least one of hydroxy and acyloxy. The second functional group is thermally polymerizable. In the thermosetting liquid-crystal polyester composition, the liquid-crystal polyester (A) is preferably a liquid-crystal polyester that contains a monomer unit derived from an aromatic compound and has an average degree of polymerization of from 3 to 30 and a melting point of 250°C or lower.

## Description

### Technical Field

The present invention relates to thermosetting resin composition including liquid-crystal polyesters (thermosetting liquid-crystal polyester compositions) and cured products of the thermosetting resin compositions.

### Background Art

Liquid-crystal polymers typified by liquid-crystal polyesters excel in various properties such as heat resistance, moldability, chemical resistance, and mechanical strength and are used in a variety of uses such as electrical and electronic components and automobile parts. Among them, thermosetting liquid-crystal polymer materials, when cured by heating, can form cured products having very high heat resistance and thereby become a focus of attention recently.

Exemplary known thermosetting liquid-crystal polymer materials include main chain thermotropic liquid-crystal esters and other materials each including a liquid-crystal esters and other materials each including a liquid-crystal oligomer end-capped with any of phenylacetylene, phenylmaleimide, and nadimide reactive end-groups (see Patent Literature (PTL) 1 to 3). Another known thermosetting liquid-crystal polymer material is prepared by allowing a liquid crystal thermosetting oligomer to react with a specific fluorine compound, where the liquid crystal thermosetting oligomer has one or more soluble structural units in a main chain thereof and has a thermosetting group at one or more of two ends of the main chain (see PTL 4). Still another known material is prepared by allowing the thermosetting liquid-crystal oligomer to react with a nanofiller substituted with a metal alkoxide compound on a surface thereof (see PTL 5).

Another known thermosetting liquid-crystal polymer material includes a liquid-crystal polymer bonded with crosslinkable groups via spacer units at ends of the polymer (see PTL 6). Yet another known thermosetting liquid-crystal polymer material includes a liquid-crystal polyester containing radically polymerizable groups at both ends of the polymer, where the radically polymerizable groups are exemplified by optionally substituted maleimido, optionally substituted nadimido, ethynyl, and benzocyclobutene groups (see PTL 7).

### Citation List

### Patent Literature

PTL 1: Japanese Unexamined Patent Application Publication (JP-A) (Translation of PCT Application) No. 2004-509190
PTL 2: United States Patent (U.S. Pat.) No. 6,939,940
PTL 3: U.S. Pat. No. 7,507,784
PTL 4: JP-A No. 2011-111619
PTL 5: JP-A No. 2011-084707
PTL 6: JP-A (Translation of PCT Application) No. 2002-521354
PTL 7: U.S. Pat. No. 5,114,612

### Summary of Invention

### Technical Problem

The materials disclosed in PTL 1 to 3, however, require heating at a high temperature of 350°C or higher so as to be cured. Unfortunately, this may complicate production processes of their cured products and may cause components to volatilize and/or decompose upon curing. In addition, the materials, when used typically as encapsulants (sealants) for encapsulation of products, may cause the products to deteriorate. In the materials disclosed in PTL 4 and 5, the liquid-crystal polymer main chain includes soluble structural units as essential structural units, where the soluble structural units each contain an amide bond and/or an amine bond. Disadvantageously, the materials give cured products that have unsatisfactory resistance to hydrolysis. The material disclosed in PTL 6 includes spacer units (e.g., alkylene groups) as linkage groups between the liquid-crystal polymer and the crosslinkable groups. Unfortunately, this causes the material to be susceptible to thermal decomposition and to give a cured product that has inferior heat resistance. The material disclosed in PTL 7 disadvantageously give a cured product that is brittle.

Accordingly, it is an object of the present invention to provide a thermosetting composition (thermosetting liquid-crystal polyester composition) that is curable at a relatively low temperature (e.g., 250°C or lower) and can give a cured product excellent in various properties such as heat resistance.

### Solution to Problem

After intensive investigations to achieve the object, the present inventors have found as follows. Assume that a liquid-crystal polyester of a specific structure and a compound containing a specific functional group in the molecule are melted and mixed (melt-blended) with each other to give a thermosetting composition. The resulting thermosetting composition is curable at a relatively low temperature and can give a cured product excellent in various properties such as heat resistance. The present invention has been made based on these findings.

Specifically, the present invention provides, in an aspect, a thermosetting liquid-crystal polyester composition that is prepared by melt-blending a liquid-crystal polyester (A) and a compound (B) with each other. The liquid-crystal polyester (A) contains hydroxy and/or acyloxy at an end of the molecular chain. The compound (B) contains a first functional group and a second functional group in the molecule. The first functional group is reactive with the hydroxy and/or acyloxy (hydroxy- and/or acyloxy-reactive functional group). The second functional group is thermally polymerizable (thermally polymerizable functional group).

In the thermosetting liquid-crystal polyester composition, the liquid-crystal polyester (A) may include a liquid-crystal polyester that contains a constitutional unit derived from an aromatic compound monomer and has an average degree of polymerization of from 3 to 30 and a melting point of 250°C or lower.

In the thermosetting liquid-crystal polyester composition, the hydroxy- and/or acyloxy-reactive functional group of the compound (B) may include at least one functional group selected from the group consisting of α, β-unsaturated carbonyl, epoxy, maleimido, ester, acid anhydride, and carboxy groups. The thermally polymerizable functional group in the compound (B) may include at least one thermally polymerizable functional group selected from the group consisting of maleimido, nadimido, phthalimido, cyanato, phthalonitrile, styryl, ethynyl, propargyl ether, benzocyclobutene, and biphenylene groups, and substitution products or derivatives of them.

The present invention provides, in another aspect, a thermosetting liquid-crystal polyester composition that includes at least one compound selected from the group consisting of compounds represented by Formula (1), compounds represented by Formula (2), compounds represented by Formula (3), compounds represented by Formula (4), and compounds represented by Formula (5): 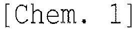 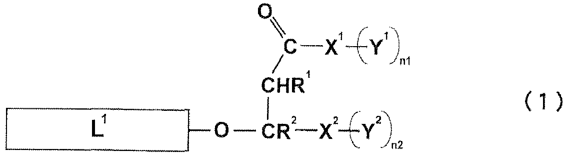 where L¹ represents a liquid-crystal polyester skeleton; X¹ and X² each represent, identically or differently, an organic group, where X¹ and X² may be linked to each other to form a ring with the three specified carbon atoms; R¹ and R² are each, identically or differently, selected from hydrogen and optionally substituted alkyl; Y¹ and Y² each represent, identically or differently in each occurrence, a thermally polymerizable functional group; and n1 and n2 each represent, identically or differently, an integer of 0 or more, where the total of n1 and n2 is an integer of 1 or more, 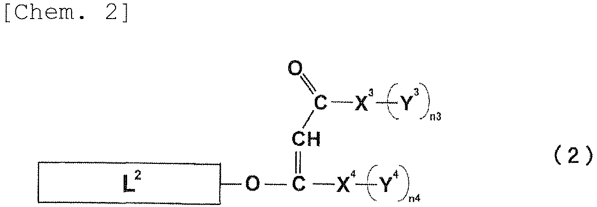 where L² represents a liquid-crystal polyester skeleton; X³ and X⁴ each represent, identically or differently, an organic group, where X³ and X⁴ may be linked to each other to form a ring with the three specified carbon atoms; Y³ and Y⁴ each represent, identically or differently in each occurrence, a thermally polymerizable functional group; and n3 and n4 each represent, identically or differently, an integer of 0 or more, where the total of n3 and n4 is an integer of 1 or more, 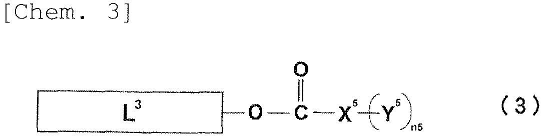 where L³ represents a liquid-crystal polyester skeleton; X⁵ represents an organic group; Y⁵ represents, independently in each occurrence, a thermally polymerizable functional group; and n5 represents an integer of 1 or more, 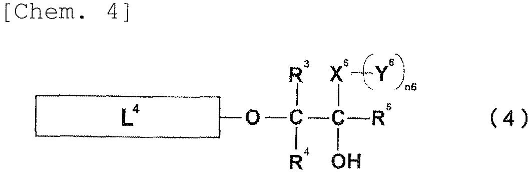 where L⁴ represents a liquid-crystal polyester skeleton; X⁶ represents an organic group; R³ to R⁵ are each, identically or differently, selected from hydrogen and optionally substituted alkyl; Y⁶ represents, independently in each occurrence, a thermally polymerizable functional group; and n6 represents an integer of 1 or more, 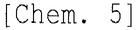 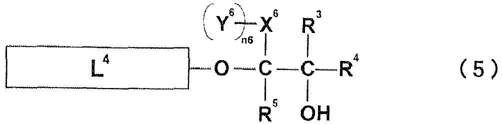 where L⁴, X⁶, R³ to R⁵, Y⁶, and n6 are as defined above.

The thermosetting liquid-crystal polyester compositions may further include an inorganic filler.

In addition, the present invention provides, in still another aspect, a cured product of any of the thermosetting liquid-crystal polyester compositions.

The cured product may have a 5% weight loss temperature of 350°C or higher as measured at a rate of temperature rise of 10°C per minute in the air and may have an activation energy of 150 kJ/mol or more for a thermal decomposition reaction in the air.

### Advantageous Effects of Invention

The thermosetting liquid-crystal polyester compositions according to the present invention, as having the configurations, can be cured at a relatively low temperature (e.g., 250°C or lower) and, when cured, can give cured products that have excellent heat resistance. In addition, the thermosetting liquid-crystal polyester compositions according to the present invention each include a liquid-crystal polyester as an essential component, and the cured products of the compositions also have excellent workability and dimensional stability, low linear expansion, high thermal conduction, low hygroscopicity, and excellent dielectric properties.

### Description of Embodiments

### Thermosetting Liquid-Crystal Polyester Compositions

The thermosetting liquid-crystal polyester composition according to an embodiment of the present invention is a thermosetting composition (thermosetting resin composition) prepared by melt-blending a component (A) and a component (B) with each other.

The component (A) is a liquid-crystal polyester including, at an end of the molecular chain, at least one group selected from the group consisting of hydroxy, acyloxy, aromatic rings, and conjugated diene structures. The component (A) is also referred to as a "liquid-crystal polyester (A)". The at least one group is preferably selected from hydroxy and acyloxy.

The component (B) is a compound containing a first functional group and a second functional group in the molecule. The first functional group is reactive with the at least one group selected from the group consisting of hydroxy, acyloxy, aromatic rings, and conjugated diene structures. The first functional group is preferably reactive with hydroxy and/or acyloxy. The second functional group is thermally polymerizable. The component (B) is also referred to as a "compound (B)".

The term "hydroxy and/or acyloxy" refers to "one or both of hydroxy and acyloxy groups". The same is true for other descriptions.

### Liquid-Crystal Polyester (A)

The liquid-crystal polyester (A) to constitute the thermosetting liquid-crystal polyester composition according to the present invention is a liquid-crystal polyester that contains an addition-reactive group (a) at an end of the molecular chain. The "addition-reactive group (a)" refers to at least one group selected from the group consisting of hydroxy, acyloxy, aromatic rings, and conjugated diene structures, as is described above. The liquid-crystal polyester (A) is a liquid-crystal polyester (thermotropic liquid-crystal polymer) which is a polymer (polymer or oligomer) having a polyester structure and gives a melt (e.g., melt at 450°C or lower) offering optical anisotropy.

In an embodiment, the liquid-crystal polyester (A) contains terminal hydroxy in the molecular chain. In this embodiment, the liquid-crystal polyester (A) may have the terminal hydroxy at either one or both ends of the molecular chain without limitation. The liquid-crystal polyester (A) may be one containing hydroxy in another moiety than the molecular chain ends.

The liquid-crystal polyester (A) may contain any of phenolic hydroxy and alcoholic hydroxy as the terminal hydroxy in the molecular chain. In particular, the liquid-crystal polyester (A) preferably contains phenolic hydroxy as the terminal hydroxy in the molecular chain. This is preferred from the viewpoint of the heat resistance of the cured product. As used herein the term "phenolic hydroxy" includes not only hydroxy bonded to a substituted or unsubstituted benzene ring, but also hydroxy bonded to another aromatic ring (e.g., naphthalene ring or anthracene ring).

In another embodiment, the liquid-crystal polyester (A) contains terminal acyloxy in the molecular chain. In this embodiment, the liquid-crystal polyester (A) may have the terminal acyloxy at either one or both ends of the molecular chain without limitation. The liquid-crystal polyester (A) may also be one containing acyloxy in another moiety than the molecular chain ends.

The liquid-crystal polyester (A) may have any typically of acetyloxy (acetoxy), propionyloxy, and butyryloxy as the terminal acyloxy in the molecular chain. In particular, the liquid-crystal polyester (A) preferably contains acetoxy as the terminal acyloxy in the molecular chain. This is preferred for versatility (availability) and reactivity of starting materials.

In an embodiment, the liquid-crystal polyester (A) contains a terminal aromatic ring in the molecular chain.

In this embodiment, the liquid-crystal polyester (A) may contain the terminal aromatic ring at either one or both ends of the molecular chain without limitation. The liquid-crystal polyester (A) may also be one containing an aromatic ring in another moiety than the molecular chain ends. The terminal aromatic ring in the molecular chain of the liquid-crystal polyester (A) may bear one or more substituents per ring. The substituents are exemplified by, but not limited to, known or common substituents such as those exemplified as substituents which the after-mentioned aromatic hydroxycarboxylic acids may have.

In an embodiment, the liquid-crystal polyester (A) contains terminal phenolic hydroxy in the molecular chain. The liquid-crystal polyester (A) in this embodiment serves as a liquid-crystal polyester containing terminal hydroxy in the molecular chain and also as a liquid-crystal polyester containing a terminal aromatic ring in the molecular chain.

In an embodiment, the liquid-crystal polyester (A) contains a terminal conjugated diene structure in the molecular chain. In this embodiment, the liquid-crystal polyester (A) may contain the terminal conjugated diene structure at either one or both ends of the molecular chain without limitation. The liquid-crystal polyester (A) may also be one containing a conjugated diene structure in another moiety than the molecular chain ends.

The terminal conjugated diene structure in the molecular chain of the liquid-crystal polyester (A) is exemplified by chain conjugated diene structures and cyclic conjugated diene structures. The chain conjugated diene structures are exemplified by structures derived from (corresponding to) 1,3-butadiene, isoprene, 2,3-dimethyl-1,3-butadiene, 1,3-pentadiene, and 1,3-hexadiene. The cyclic conjugated diene structures are exemplified by structures derived from (corresponding to) 1,3-cyclopentadiene, 1,3-cyclohexadiene, furan and derivatives thereof, and thiophene and derivatives thereof.

The liquid-crystal polyester (A) may have two or more groups selected from the group consisting of hydroxy, acyloxy, aromatic rings, and conjugated diene structures terminally in the molecular chain. Typically, the liquid-crystal polyester (A) may contain both terminal hydroxy and terminal acyloxy in the molecular chain. Specifically, the liquid-crystal polyester (A) may contain hydroxy at one end of the molecular chain and acyloxy at the other end.

The liquid-crystal polyester (A) is preferably a liquid-crystal polyester containing a constitutional unit (repeating constitutional unit) derived from an aromatic compound (aromatic compound monomer). This is preferred from the viewpoint of optical anisotropy of the melt. Specifically, the liquid-crystal polyester (A) is preferably a liquid-crystal polyester including a constitutional unit or units derived from at least one aromatic compound selected from the group consisting of aromatic hydroxycarboxylic acids, aromatic dicarboxylic acids, and aromatic diols.

The aromatic hydroxycarboxylic acids are exemplified by 4-hydroxybenzoic acid, 3-hydroxybenzoic acid, 1-hydroxy-2-naphthoic acid, 3-hydroxy-2-naphthoic acid, 6-hydroxy-2-naphthoic acid, 5-hydroxy-1-naphthoic acid, 4'-hydroxy[1,1'-biphenyl]-4-carboxylic acid, and derivatives of them. The derivatives are exemplified by compounds corresponding to the aromatic hydroxycarboxylic acids, except for being substituted with one or more C₀-C₂₀ (preferably C₀-C₁₀) substituents on the aromatic ring(s). The substituents are exemplified by alkyl such as methyl and ethyl; alkenyl such as vinyl and allyl; alkynyl such as ethynyl and propynyl; halogen such as chlorine, bromine, and iodine; hydroxy; alkoxy including C₁-C₆ alkoxy such as methoxy, ethoxy, propoxy, isopropyloxy, butoxy, and isobutyloxy, of which C₁-C₄ alkoxy is preferred; alkenyloxy including C₂-C₆ alkenyloxy such as allyloxy, of which C₂-C₄ alkenyloxy is preferred; aryloxy including C₆-C₁₄ aryloxy such as phenoxy, tolyloxy, and naphthyloxy, where the aryloxy may contain, on the aromatic ring(s), one or more substituents such as C₁-C₄ alkyl, C₂-C₄ alkenyl, halogen, and C₁-C₄ alkoxy; aralkyloxy including C₇-C₁₈ aralkyloxy such as benzyloxy and phenethyloxy; acyloxy including C₁-C₁₂ acyloxy such as acetyloxy, propionyloxy, (meth)acryloyloxy, and benzoyloxy; mercapto; alkylthio including C₁-C₆ alkylthio such as methylthio and ethylthio, of which C₁-C₄ alkylthio is preferred; alkenylthio including C₂-C₆ alkenylthio such as allylthio, of which C₂-C₄ alkenylthio is preferred; arylthio including C₆-C₁₄ arylthio such as phenylthio, tolylthio, and naphthylthio, where the arylthio may contain, on the aromatic ring(s), one or more substituents such as C₁-C₄ alkyl, C₂-C₄ alkenyl, halogen, and C₁-C₄ alkoxy; aralkylthio including C₇-C₁₈ aralkylthio such as benzylthio and phenethylthio; carboxy; alkoxycarbonyl including (C₁-C₆ alkoxy)-carbonyl such as methoxycarbonyl, ethoxycarbonyl, propoxycarbonyl, and butoxycarbonyl; aryloxycarbonyl including (C₆-C₁₄ aryloxy)-carbonyl such as phenoxycarbonyl, tolyloxycarbonyl, and naphthyloxycarbonyl; aralkyloxycarbonyl including (C₇-C₁₈ aralkyloxy)-carbonyl such as benzyloxycarbonyl; amino; mono- or di-alkylamino including mono- or di-(C₁-C₆ alkyl)amino such as methylamino, ethylamino, dimethylamino, and diethylamino; mono- or di-phenylamino such as phenylamino; acylamino including C₁-C₁₁ acylamino such as acetylamino, propionylamino, and benzoylamino; epoxy-containing groups such as glycidyl, glycidyloxy, and 3,4-epoxycyclohexyl; oxetanyl-containing groups such as ethyloxetanyloxy; acyl such as acetyl, propionyl, and benzoyl; oxo; isocyanato; and groups each including two or more of them bonded to each other, where necessary, through C₁-C₆ alkylene. The liquid-crystal polyester (A) may contain each of different constitutional units derived from aromatic hydroxycarboxylic acids alone or in combination.

The aromatic dicarboxylic acids are exemplified by phthalic acid, terephthalic acid, isophthalic acid, 2,6-naphthalenedicarboxylic acid, 1,5-naphthalenedicarboxylic acid, [1,1'-biphenyl]-4,4'-dicarboxylic acid, 4,4'-oxybis(benzoic acid), 4,4'-thiobis(benzoic acid), 4-[2-(4-carboxyphenoxy)ethoxy]benzoic acid, and derivatives of them. The derivatives are exemplified by compounds corresponding to the aromatic dicarboxylic acids, except for being substituted with one or more C₀-C₂₀ (preferably C₀-C₁₀) substituents on the aromatic ring(s). The substituents are exemplified as with the substituents in the aromatic hydroxycarboxylic acids. The liquid-crystal polyester (A) may contain each of different constitutional units derived from aromatic dicarboxylic acids alone or in combination.

The aromatic diols are exemplified by 4,4'-dihydroxybiphenyl, hydroquinone, resorcinol, 2,6-naphthalenediol, 1,5-naphthalenediol, [1,1'-biphenyl]-4,4'-diol, 4,4'-dihydroxydiphenyl ether, bis(4-hydroxyphenyl)methanone, bisphenol-A, bisphenol-F, bisphenol-S, (phenylsulfonyl)benzene, [1,1'-biphenyl]-2,5-diol, and derivatives of them. The derivatives are exemplified by compounds corresponding to the aromatic diols, except for being substituted with one or more C₀-C₂₀ (preferably C₀-C₁₀) substituents on the aromatic ring(s). The substituents are exemplified as with the substituents in the aromatic hydroxycarboxylic acids. The liquid-crystal polyester (A) may contain each of different constitutional units derived from aromatic diols alone or in combination.

Monomers to constitute the liquid-crystal polyester (A) may include one or more of the aromatic compounds (the aromatic hydroxycarboxylic acids, aromatic dicarboxylic acids, and/or aromatic diols) in a proportion not critical, but preferably from 60 to 100 percent by weight, more preferably from 80 to 100 percent by weight, and furthermore preferably from 90 to 100 percent by weight, based on the total amount (100 percent by weight) of the monomers. When the monomers include two or more different aromatic compounds, the term "proportion" refers to the proportion of the total amount of them. In particular, the liquid-crystal polyester (A) preferably includes constitutional units derived from one or more of the aromatic compounds (aromatic hydroxycarboxylic acids, aromatic dicarboxylic acids, and aromatic diols) in a proportion of approximately 100%. The monomers, if containing one or more of the aromatic compounds in a proportion of less than 60 percent by weight, may cause the liquid-crystal polyester (A) to develop, with difficulty, liquid crystallinity in the molten state and/or may cause the cured product to be inferior in heat resistance and/or water-vapor resistance (resistance to hydrolysis). These may occur in some constitutional units derived from other monomers to be introduced.

The liquid-crystal polyester (A) may contain one or more other constitutional units. The term "other constitutional units" refers to constitutional units excluding the above-mentioned constitutional units, i.e., constitutional units derived from aromatic hydroxycarboxylic acids, constitutional units derived from aromatic dicarboxylic acids, and constitutional units derived from aromatic diols. The other constitutional units are exemplified by constitutional units derived from aromatic diamines, and constitutional units derived from phenolic-hydroxy-containing aromatic amines.

The aromatic diamines are exemplified by 1,4-benzenediamine, 1,3-benzenediamine, 4-methyl-1,3-benzenediamine, 4-(4-aminobenzyl)phenylamine, 4-(4-aminophenoxy)phenylamine, 3-(4-aminophenoxy)phenylamine, 4'-amino-3,3'-dimethyl[1,1'-biphenyl]-4-ylamine, 4'-amino-3,3'-bis(trifluoromethyl)[1,1'-biphenyl]-4-ylamine, 4-amino-N-(4-aminophenyl)benzamide, 4-[(4-aminophenyl)sulfonyl]phenylamine, bis(4-aminophenyl)methanone, and derivatives of them. The derivatives are exemplified by compounds corresponding to the aromatic diamines, except for being substituted with one or more C₀-C₂₀ (preferably C₀-C₁₀) substituents on the aromatic ring(s). The substituents are exemplified as with the substituents in the aromatic hydroxycarboxylic acids. The liquid-crystal polyester (A) may contain each of different constitutional units derived from aromatic diamines alone or in combination.

The phenolic-hydroxy-containing aromatic amines are exemplified by 4-aminophenol, 4-acetamidophenol, 3-aminophenol, 3-acetamidophenol, 6-amino-2-naphthol, 5-amino-1-naphthol, 4'-hydroxy-[1,1'-biphenyl]-4-amine, 4-amino-4'-hydroxydiphenylmethane, and derivatives of them. The derivatives are exemplified by compounds corresponding to the phenolic-hydroxy-containing aromatic amines, except for being substituted with one or more C₀-C₂₀ (preferably C₀-C₁₀) substituents on the aromatic ring(s). The substituents are exemplified as with the substituents in the aromatic hydroxycarboxylic acids. The liquid-crystal polyester (A) may contain each of different constitutional units derived from phenolic-hydroxy-containing aromatic amines alone or in combination.

Monomers to constitute the liquid-crystal polyester (A) may include one or more of the aromatic compounds (aromatic diamines and phenolic-hydroxy-containing aromatic amines) in a proportion not critical, but preferably 30 percent by weight or less (e.g., from 0 to 30 percent by weight), more preferably 10 percent by weight or less, and furthermore preferably 5 percent by weight or less, based on the total amount (100 percent by weight) of the monomers. When the monomers include two or more different aromatic compounds, the term "proportion" refers to the proportion of the total amount of them. The monomers, if containing one or more of the aromatic compounds in a proportion of greater than 30 percent by weight, may cause the cured product to have lower resistance to moisture absorption (resistance to hydrolysis).

The liquid-crystal polyester (A) may be produced by any method and may be produced by polymerizing the aromatic compound(s) (monomer(s)) according to a known or common process. Specifically, the liquid-crystal polyester (A) may be produced typically by acylating a hydroxy- and/or amino-containing aromatic compound with an excess of a fatty acid anhydride to give an acylated product, and subjecting the acylated product to a reaction (transesterification and/or transamidation) with a carboxy-containing aromatic compound. The hydroxy- and/or amino-containing aromatic compound is exemplified by the aromatic hydroxycarboxylic acids, aromatic diols, phenolic-hydroxy-containing aromatic amines, and aromatic diamine. The carboxy-containing aromatic compound is exemplified by the aromatic hydroxycarboxylic acids and aromatic dicarboxylic acids. More specifically, the liquid-crystal polyester (A) may be produced typically by a method described in JP-A No. 2007-119610. The liquid-crystal polyester (A) is also available as a commercial product.

In an embodiment, the liquid-crystal polyester (A) contains terminal hydroxy in the molecular chain. This liquid-crystal polyester (A) may be prepared typically by controlling the monomer formulation so that hydroxy is in excess. For example, an aromatic diol as a monomer component may be used in excess. Specifically, in an embodiment, the monomers to constitute and to form the liquid-crystal polyester (A) include hydroxy and a functional group that undergoes condensation reaction with the hydroxy. In this embodiment, the monomers may include the hydroxy in a proportion relative to the functional group not critical, but preferably 1.02 moles or more (e.g., from 1.02 to 100 moles), more preferably 1.05 moles or more, and furthermore preferably 1.10 moles or more, per mole of the functional group that undergoes condensation reaction with the hydroxy. The functional group is exemplified by carboxy; groups derived from carboxy, such as ester groups, acid anhydride groups, and acid halide (acyl halide) groups; and amino. The monomers, if containing the hydroxy in a proportion of less than 1.02 moles, may cause the resulting liquid-crystal polyester (A) to have an excessively high molecular weight and to require a much time to undergo a thermosetting reaction. More specifically, the monomers to constitute the liquid-crystal polyester (A) may include an aromatic diol or diols in a proportion not critical, but preferably from 3 to 25 mole percent, and more preferably from 4 to 25 mole percent, based on the total amount (100 mole percent) of the monomers.

In an embodiment, the liquid-crystal polyester (A) contains terminal acyloxy in the molecular chain. This liquid-crystal polyester (A) may be prepared typically by preparing a liquid-crystal polyester (A) containing terminal hydroxy in the molecular chain, and acylating the hydroxy with a known or common acylating agent. The acylating agent is exemplified by fatty acid anhydrides such as acetic anhydride; and acid halides.

In an embodiment, the liquid-crystal polyester (A) contains a terminal aromatic ring in the molecular chain. This liquid-crystal polyester (A) may be prepared typically using a monomer or monomers including one or more aromatic compounds approximately alone. The aromatic compounds are exemplified by the aromatic hydroxycarboxylic acids, the aromatic dicarboxylic acids, and the aromatic diols. The liquid-crystal polyester (A) may also be prepared by preparing a liquid-crystal polyester containing a terminal reactive group (e.g., hydroxy and/or carboxy) in the molecular chain, and subjecting the terminal reactive group to an addition reaction with an aromatic compound to form a terminal aromatic ring in the molecular chain.

In an embodiment, the liquid-crystal polyester (A) contains a terminal conjugated diene structure in the molecular chain. This liquid-crystal polyester (A) may be prepared by preparing a liquid-crystal polyester containing a terminal reactive group (e.g., hydroxy and/or carboxy) in the molecular chain, and subjecting the terminal reactive group to a reaction with a compound, where the compound has a conjugated diene structure and is capable of undergoing an addition reaction with the reactive group. The compound is exemplified by (1-methyl-2,4-cyclopentadien-1-yl)methanol.

The liquid-crystal polyester (A) may have an average degree of polymerization not critical, but preferably from 3 to 30, more preferably from 4 to 25, and furthermore preferably from 5 to 20. The liquid-crystal polyester (A), if having an average degree of polymerization of less than 3, may offer lower curing reactivity. In contrast, the liquid-crystal polyester (A), if having an average degree of polymerization of greater than 30, may require a higher reaction temperature upon curing. The average degree of polymerization of the liquid-crystal polyester (A) may be determined typically by GPC measurement.

The liquid-crystal polyester (A) may have a glass transition temperature (Tg) not critical, but preferably from 30°C to 150°C, more preferably from 40°C to 120°C, and furthermore preferably from 50°C to 100°C. The liquid-crystal polyester (A), if having a glass transition temperature of lower than 30°C, may cause the curd product to have inferior heat resistance. In contrast, the liquid-crystal polyester (A), if having a glass transition temperature of greater than 150°C, may require melt blending with the compound (B) at a higher temperature, and this may cause the thermally polymerizable functional group of the compound (B) to undergo a polymerization reaction upon melt blending. The glass transition temperature of the liquid-crystal polyester (A) may be measured typically by thermal analysis such as DSC or TGA; or by dynamic viscoelastic measurement.

The liquid-crystal polyester (A) may have a melting point (Tm) not critical, but preferably 250°C or lower (e.g., from 40°C to 250°C), more preferably from 80°C to 220°C, and furthermore preferably from 120°C to 200°C. The liquid-crystal polyester (A), if having a melting point of higher than 250°C, may require melt blending with the compound (B) at a higher temperature, and this may cause the thermally polymerizable functional group of the compound (B) to undergo a polymerization reaction upon melt blending. The melting point of the liquid-crystal polyester (A) may be measured typically by thermal analysis such as DSC or TGA, or by dynamic viscoelastic measurement.

### Compound (B)

The compound (B) to constitute the thermosetting liquid-crystal polyester composition according to the present invention is a compound containing an addition-reactive group (b) and a thermally polymerizable functional group (thermosetting functional group) in the molecule (per molecule), as is described above. The "addition-reactive group (b)" refers to a functional group that is reactive with the terminal addition-reactive group (a) in the molecular chain of the liquid-crystal polyester (A). The terminal addition-reactive group (a) is at least one selected from the group consisting of hydroxy, acyloxy, aromatic rings, and conjugated diene structures.

The addition-reactive group (b) is not limited, as long as being a functional group that is reactive with the addition-reactive group (a) of the liquid-crystal polyester (A). From the viewpoint of the temperature at which the reaction proceeds, the addition-reactive group (b) is exemplified by α,β-unsaturated carbonyl groups; epoxy; maleimido; ester groups; acid anhydride groups (e.g., maleic anhydride group); and carboxy. The α,β-unsaturated carbonyl groups are exemplified by ketone groups containing a carbon-carbon unsaturated bond between the alpha position and the beta position of carbonyl carbon; ester groups containing a carbon-carbon unsaturated bond between the alpha position and the beta position of carbonyl carbon; amido groups containing a carbon-carbon unsaturated bond between the alpha position and the beta position of carbonyl carbon; and imido groups containing a carbon-carbon unsaturated bond between the alpha position and the beta position of carbonyl carbon. The compound (B) may contain each of different addition-reactive groups (b) alone or in combination.

Of the above-exemplified addition-reactive groups (b), the α,β-unsaturated carbonyl, epoxy, maleimido, ester, acid anhydride, and carboxy groups are hydroxy-reactive groups, i.e., addition-reactive groups that react with hydroxy. Of the above-exemplified addition-reactive groups (b), the carboxy group is an acyloxy-reactive group, i.e., an addition-reactive group that reacts with acyloxy. Of the above-exemplified addition-reactive groups (b), the maleimido and acid anhydride groups (in particular, maleic anhydride group) are addition-reactive groups that react (undergo a cyclization addition reaction) with an aromatic ring and/or addition-reactive groups that react (undergo a cyclization addition reaction) with a conjugated diene structure.

The compound (B) may contain the addition-reactive group(s) (b) in a number not critical, as long as being 1 or more, but preferably from 1 to 10, and more preferably from 1 to 5.

The thermally polymerizable functional group is not limited, as long as being a functional group that is polymerizable by heating. From the viewpoint of the temperature at which the polymerization reaction proceeds, the thermally polymerizable functional group is exemplified by maleimido, nadimido, phthalimido, cyanato, nitrile, phthalonitrile, styryl, ethynyl, propargyl ether, benzocyclobutene, and biphenylene groups, and substitution products or derivatives of them. The substitution products or derivatives are exemplified by thermally polymerizable functional groups corresponding to the above-mentioned thermally polymerizable functional groups, except for bearing one or more substituents. The substituents are exemplified as with the substituents for the aromatic hydroxycarboxylic acids. Among them, maleimido is preferred because part or all of its structure functions also as the addition-reactive group (b). The compound (B) may contain each of different thermally polymerizable functional groups alone or in combination.

The compound (B) may contain the thermally polymerizable functional group(s) in a number not critical, as long as being 1 or more, but preferably from 1 to 10, and more preferably from 1 to 5.

The compound (B) should contain at least one addition-reactive group (b) and at least one thermally polymerizable functional group. Typically, in an embodiment, the compound (B) contains maleimido that serves both as an addition-reactive group (b) and a thermally polymerizable functional group. In this embodiment, the compound (B) should contain maleimido in a number of 2 or more. This is because the maleimido loses the alpha carbon-beta carbon double bond and no longer functions as a thermally polymerizable functional group upon the reaction with the hydroxy, aromatic ring, or conjugated diene structure of the liquid-crystal polyester (A).

The compound (B) is exemplified by compounds containing at least one addition-reactive group (b) and at least one thermally polymerizable functional group per molecule and contains carbon atoms in a number of 100 or less (preferably from 10 to 50). Such compound (B) is exemplified by compounds each including a hydrocarbon group, a heterocyclic group, or a group including two or more of them bonded to each other through one or more linkage groups. The "linkage group" refers to a divalent group containing one or more atoms. The hydrocarbon group, heterocyclic group, and group including two or more of them bonded to each other through one or more linkage groups are exemplified by the groups (organic groups) exemplified as X¹ and X² in Formula (i).

Specifically, the compound (B) is exemplified by a compound represented by Formula (i). This compound is a compound containing an α,β-unsaturated carbonyl group and a thermally polymerizable functional group, where the unsaturated moiety is a double bond. Formula (i) is expressed as follows:

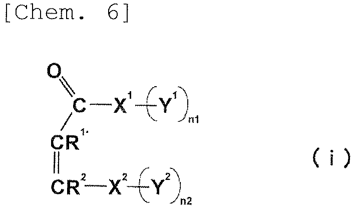

In Formula (i), X¹ and X² each represent, identically or differently, an organic group. The organic group is exemplified by, but not limited to, substituted or unsubstituted hydrocarbon groups, substituted or unsubstituted heterocyclic groups, and groups each including two or more of them bonded to each other through one or more linkage groups.

The hydrocarbon groups are exemplified by aliphatic hydrocarbon groups, alicyclic hydrocarbon groups, aromatic hydrocarbon groups, and groups each including two or more of them bonded to each other. The aliphatic hydrocarbon groups are exemplified by alkyl, alkenyl, alkynyl, and divalent or higher groups corresponding to them. The alkyl is exemplified by C₁-C₂₀ alkyl such as methyl, ethyl, propyl, isopropyl, butyl, hexyl, octyl, isooctyl, decyl, and dodecyl, of which C₁-C₁₀ alkyl is preferred, and C₁-C₄ alkyl is more preferred. The alkenyl is exemplified by C₂-C₂₀ alkenyl such as vinyl, allyl, methallyl, 1-propenyl, isopropenyl, 1-butenyl, 2-butenyl, 3-butenyl, 1-pentenyl, 2-pentenyl, 3-pentenyl, 4-pentenyl, and 5-hexenyl, of which C₂-C₁₀ alkenyl is preferred, and C₂-C₄ alkenyl is more preferred. The alkynyl is exemplified by C₂-C₂₀ alkynyl such as ethynyl and propynyl, of which C₂-C₁₀ alkynyl is preferred, and C₂-C₄ alkynyl is more preferred.

The alicyclic hydrocarbon groups are exemplified by C₃-C₁₂ cycloalkyl such as cyclopropyl, cyclobutyl, cyclopentyl, cyclohexyl, and cyclododecyl, and corresponding divalent or higher groups; C₃-C₁₂ cycloalkenyl such as cyclohexenyl, and corresponding divalent or higher groups; and C₄-C₁₅ bridged hydrocarbon groups including bicycloheptyl and bicycloheptenyl, and divalent or higher groups corresponding to them.

The aromatic hydrocarbon groups are exemplified by C₆-C₁₄ aryl such as phenyl and naphthyl, of which C₆-C₁₀ aryl is preferred; and corresponding divalent or higher groups.

The hydrocarbon groups are further exemplified by groups each including an aliphatic hydrocarbon group and an alicyclic hydrocarbon group bonded to each other, such as cyclohexylmethyl, methylcyclohexyl, and divalent or higher groups corresponding to them; and groups each including an aliphatic hydrocarbon group and an aromatic hydrocarbon group bonded to each other. The latter groups are exemplified by C₇-C₁₈ aralkyl such as benzyl and phenethyl, of which C₇-C₁₀ aralkyl is preferred; (C₆-C₁₀ aryl) -C₂-C₆ alkenyl such as cinnamyl; (C₁-C₄ alkyl) -substituted aryl such as tolyl; (C₂-C₄ alkenyl)-substituted aryl such as styryl; and divalent or higher groups corresponding to them. The hydrocarbon groups may each contain one or more substituents. The substituents are exemplified by groups as with the substituents for the aromatic hydroxycarboxylic acids.

The heterocyclic groups are exemplified by pyridyl, furyl, thienyl, and divalent or higher groups corresponding to them. The heterocyclic groups may each contain one or more substituents. The substituents are exemplified by groups as with the substituents for the aromatic hydroxycarboxylic acids.

The hydrocarbon groups are further exemplified by groups each including two or more hydrocarbon groups linked to each other through one or more linkage groups. The "linkage group" refers to divalent groups containing one or more atoms and is exemplified by ester bond, ether bond, carbonate bond, amide bond, thioether bond, thioester bond, -NR- where R represents hydroxy or alkyl, imide bond, and groups each including two or more of them bonded to each other. The heterocyclic groups are further exemplified by groups each including two or more heterocyclic groups directly bonded to each other. The organic groups as X¹ and X² may also be groups each including one or more of the hydrocarbon groups and one or more of the heterocyclic groups bonded to each other directly and/or through one or more linkage groups.

X¹ and X² in Formula (i) may be linked to each other to form a ring with the three specified carbon atoms. Specifically, the ring structure formed by X¹ and X² with the three specified carbon atoms is exemplified by cycloalkenone rings; cycloalkenedione rings; furandione ring (maleic anhydride ring); pyrroledione ring (maleimide ring); lactone rings each containing a carbon-carbon unsaturated bond between the alpha position and the beta position of carbonyl carbon; and lactam rings each containing a carbon-carbon unsaturated bond between the alpha position and the beta position of carbonyl carbon.

R¹ and R² in Formula (i) are each, identically or differently, selected from hydrogen and optionally substituted alkyl. The alkyl is exemplified by C₁-C₂₀ straight or branched chain alkyl such as methyl, ethyl, propyl, isopropyl, butyl, isobutyl, s-butyl, t-butyl, pentyl, hexyl, octyl, and 2-ethylhexyl. The alkyl may be substituted with one or more substituents. The substituents are exemplified by groups, excluding alkyl, as with the substituents in the aromatic hydroxycarboxylic acids.

Y¹ and Y² in Formula (i) represent, identically or differently in each occurrence, a thermally polymerizable functional group. The thermally polymerizable functional group is exemplified by the above-listed thermally polymerizable functional groups. In Formula (i), n1 and n2 each represent, identically or differently, an integer of 0 or more, where the total of n1 and n2 (n1+n2) is an integer of 1 or more. Namely, the compound represented by Formula (i) contains at least one thermally polymerizable functional groups per molecule. The total of n1 and n2 is typically preferably an integer from 1 to 10 and more preferably an integer from 1 to 5. Y¹ and Y² may be bonded respectively to X¹ and X² at any positions not critical. When n1 (or n2) is an integer of 2 or more, two or more occurrences of Y¹ (or Y²) may be identical or different.

The compound (B) is further exemplified by a compound represented by Formula (ii). This compound is a compound containing an α,β-unsaturated carbonyl group and a thermally polymerizable functional group, where the unsaturated moiety is a triple bond. Formula (ii) is expressed as follows:

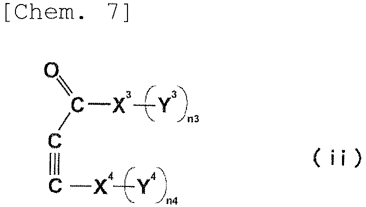

In Formula (ii), X³ and X⁴ each represent, identically or differently, an organic group. The organic group is exemplified by organic groups as with X¹ and X² in Formula (i). X³ and X⁴ in Formula (ii) may be linked to each other to form a ring with the three specified carbon atoms, as with X¹ and X² in Formula (i).

Y³ and Y⁴ in Formula (ii) each represent, identically or differently in each occurrence, a thermally polymerizable functional group. The thermally polymerizable functional group is exemplified by the above-listed thermally polymerizable functional groups. In Formula (ii), n3 and n4 each represent, identically or differently, an integer of 0 or more, where the total of n3 and n4 (n3+n4) is an integer of 1 or more. Namely, the compound represented by Formula (ii) contains at least one thermally polymerizable functional groups per molecule. The total of n3 and n4 is typically preferably an integer from 1 to 10, and more preferably an integer from 1 to 5. Y³ and Y⁴ may be respectively bonded to X³ and X⁴ at any positions not critical. When n3 (or n4) is an integer of 2 or more, two or more occurrences of Y³ (or Y⁴) may be identical or different.

The compound (B) is further exemplified by a compound represented by Formula (iii). This compound is a carboxylic acid, or a derivative thereof, containing a thermally polymerizable functional group. Formula (iii) is expressed as follows:

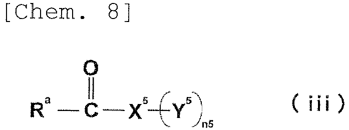

In Formula (iii), R^{a} is selected from hydroxy (-OH), alkoxy, halogen, and acyloxy. The alkoxy is exemplified by C₁-C₂₀ alkoxy such as methoxy, ethoxy, and propoxy; and derivatives thereof. The halogen is exemplified by fluorine, chlorine, bromine, and iodine. The acyloxy is exemplified by acetyloxy, propionyloxy, butyryloxy, and a group represented by the formula below. In the formula, X⁵, Y⁵, and n5 are as defined in Formula (iii). The formula is expressed as follows:

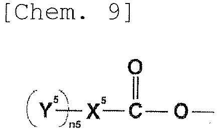

X⁵ in Formula (iii) represents an organic group. The organic group is exemplified by organic groups as with X¹ and X² in Formula (i). Y⁵ in Formula (iii) represents, independently in each occurrence, a thermally polymerizable functional group. The thermally polymerizable functional group is exemplified by the above-listed thermally polymerizable functional groups. In Formula (iii), n5 represents an integer of 1 or more. The number n5 is typically preferably an integer from 1 to 10, and more preferably an integer from 1 to 5. Y⁵ may be bonded to X⁵ at any position not critical. When n5 is an integer of 2 or more, two or more occurrences of Y⁵ may be identical or different.

The compound (B) is further exemplified by a compound represented by Formula (iv). This compound is an epoxy compound containing a thermally polymerizable functional group. Formula (iv) is expressed as follows:

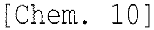

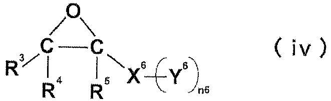

In Formula (iv), X⁶ represents an organic group. The organic group is exemplified by organic groups as with X¹ and X² in Formula (i). Y⁶ in Formula (iv) represents, independently in each occurrence, a thermally polymerizable functional group. The thermally polymerizable functional group is exemplified by the above-listed thermally polymerizable functional groups. In Formula (iv), n6 represents an integer of 1 or more. The number n6 is typically preferably an integer from 1 to 10, and more preferably an integer from 1 to 5. Y⁶ may be bonded to X⁶ at any position not critical. When n6 is an integer of 2 or more, two or more occurrences of Y⁶ may be identical or different.

R³ to R⁵ in Formula (iv) are each, identically or differently, selected from hydrogen and optionally substituted alkyl. The optionally substituted alkyl is exemplified by groups as with R¹ and R² in Formula (i).

More specifically, the compound (B) is exemplified by bismaleimide compounds such as methylenebismaleimide (4,4'-diphenylmethanebismaleimide), m-phenylenebismaleimide, 2,2'-bis[4-(4-maleimidophenoxy)phenyl]propane, ethylenebismaleimide, o-phenylenebismaleimide, p-phenylenebismaleimide, m-toluylenebismaleimide, 4,4'-biphenylenebismaleimide, 4,4'-[3,3'-dimethyl-biphenylene]bismaleimide, 4,4'-[3,3'-dimethyldiphenylmethane]bismaleimide, 4,4'-[3,3'-diethyldiphenylmethane]bismaleimide, 4,4'-diphenylmethanebismaleimide, 4,4'-diphenylpropanebismaleimide, 4,4'-diphenyl ether bismaleimide, 3,3'-diphenylsulfonebismaleimide, and 4,4'-diphenylsulfonebismaleimide; 4-maleimidobenzoic acid; methyl 4-maleimidobenzoate; and ethyl 4-maleimidobenzoate.

### Method for Producing Thermosetting Liquid-Crystal Polyester Composition

The thermosetting liquid-crystal polyester composition according to the present invention may be prepared by melt-blending the liquid-crystal polyester (A) and the compound (B) with each other, as is described above. Upon melt blending of the liquid-crystal polyester (A) and the compound (B), one or more additional components may also be blended. The term "additional components" refers to components other than the liquid-crystal polyester (A) and the compound (B). Such additional components are exemplified by after-mentioned inorganic fillers. As will be described later, the melt blending allows the reaction (addition reaction) between the addition-reactive group (a) of the liquid-crystal polyester (A) and the addition-reactive group (b) of the compound (B) to mainly proceed to give the thermosetting liquid-crystal polyester composition. The addition-reactive group (a) is at least one selected from the group consisting of hydroxy, acyloxy, aromatic rings, and conjugated diene structures. To produce the thermosetting liquid-crystal polyester composition according to the present invention, each of different liquid-crystal polyesters (A) may be used alone or in combination. Likewise, each of different compounds (B) may be used alone or in combination.

The liquid-crystal polyester (A) and the compound (B) may be used in proportions not critical to constitute the thermosetting liquid-crystal polyester composition according to the present invention. The proportions (blending ratio) may vary depending typically on the types of the liquid-crystal polyester (A) and the compound (B). Typically, the compound (B) may be used in a proportion (blending amount) of preferably from 10 to 300 parts by weight, more preferably from 20 to 250 parts by weight, and furthermore preferably from 30 to 200 parts by weight, per 100 parts by weight of the liquid-crystal polyester (A). The compound (B), if used in a proportion of less than 10 parts by weight, may cause the thermosetting liquid-crystal polyester composition to have lower curability. In contrast, the compound (B), if used in an amount of greater than 300 parts by weight, may remain in a large amount in the thermosetting liquid-crystal polyester composition to adversely affect the properties of the cured product.

The melt blending may be performed at a temperature not critical, as long as being such a temperature as to melt the liquid-crystal polyester (A) and the compound (B) (in particular, a temperature equal to or higher than the melting point of the liquid-crystal polyester (A)), but preferably 200°C or lower (e.g., from 80°C to 200°C), and more preferably from 120°C to 180°C. The melt blending, if performed at a temperature higher than 200°C, may cause the thermally polymerizable functional group derived from the compound (B) to undergo a polymerization reaction. The melt blending temperature may be controlled so as to be constant or to vary stepwise or continuously during the melt blending.

The melt blending may be performed for a time not critical, but preferably from 30 to 600 minutes, and more preferably from 60 to 480 minutes. The melt blending, if performed for a time shorter than 30 minutes, may cause the reaction between the liquid-crystal polyester (A) and the compound (B) to proceed insufficiently and may cause the cured product to have properties at insufficient levels. In contrast, the melt blending, if performed for a time longer than 600 minutes, may cause the cured product to be produced with inferior productivity.

The melt blending may be performed at normal atmospheric pressure, under reduced pressure, or under pressure (pressurizing). The melt blending can be performed in one step or in multiple batches of two or more steps.

The melt blending may be performed using a known or common device (melt blending device). The melt blending device is exemplified by, but not limited to, extruders such as single-screw extruders and twin-screw extruders; mixers such as paddle mixers, high-speed flow mixers (high-speed mixers), ribbon mixers, Banbury mixers, HAAKE mixers, and handheld immersion blenders; and kneaders.

The liquid-crystal polyester (A) and the compound (B), when melt-blended, give the thermosetting liquid-crystal polyester composition according to the present invention. The addition-reactive group (a) at an end of the molecular chain of the liquid-crystal polyester (A) reacts with the addition-reactive group (b) of the compound (B) upon melt blending to form an adduct. The thermosetting liquid-crystal polyester composition according to the present invention is a composition including the adduct as an essential component. The addition reaction allows one or more (molecules) of the liquid-crystal polyester (A) to be bonded to one or more (molecules) of the compound (B) to give the adduct.

Specifically, in an embodiment, the liquid-crystal polyester (A) contains hydroxy as the addition-reactive group (a), and the compound represented by Formula (i) is used as the compound (B). In this embodiment, the adduct between the liquid-crystal polyester (A) and the compound (B) is represented by Formula (1):

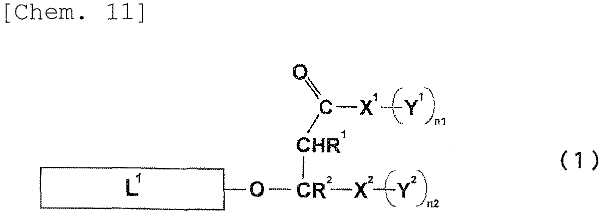

In Formula (1), L¹ represents a liquid-crystal polyester skeleton. The liquid-crystal polyester skeleton is exemplified by a skeleton corresponding to the liquid-crystal polyester (A), except for removing one hydroxy group (terminal hydroxy group in the molecular chain) therefrom; and a skeleton corresponding to an addition product, except for removing one hydroxy group (terminal hydroxy group in the molecular chain) therefrom, where the addition product is formed by two or more molecules of the liquid-crystal polyester (A) added to and linked through one or more molecules of the compound (B) (the compound represented by Formula (i)).

In Formula (1), X¹ and X², R¹ and R², Y¹ and Y², and n1 and n2 are as defined in Formula (i).

In an embodiment, the liquid-crystal polyester (A) contains an aromatic ring as the addition-reactive group (a), and the compound represented by Formula (i) is used as the compound (B). In this embodiment, the aromatic ring of the liquid-crystal polyester (A) and the carbon-carbon double bond of the compound (B) undergo a cyclization reaction (cyclization addition reaction) to form an addition product as the adduct.

In an embodiment, the liquid-crystal polyester (A) contains a conjugated diene structure as the addition-reactive group (a), and the compound represented by Formula (i) is used as the compound (B). In this embodiment, the conjugated diene structure of the liquid-crystal polyester (A) and the carbon-carbon double bond of the compound (B) may undergo a cyclization reaction (cyclization addition reaction) to form an addition product as the adduct.

In an embodiment, the liquid-crystal polyester (A) contains hydroxy as the addition-reactive group (a), and the compound represented by Formula (ii) is used as the compound (B). In this embodiment, the adduct between the liquid-crystal polyester (A) and the compound (B) is represented by Formula (2):

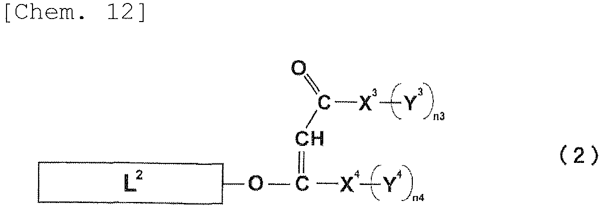

In Formula (2), L² represents a liquid-crystal polyester skeleton. The liquid-crystal polyester skeleton is exemplified by a skeleton corresponding to the liquid-crystal polyester (A), except for removing one hydroxy group (terminal hydroxy group in the molecular chain) therefrom; and a skeleton corresponding to an addition product, except for removing one hydroxy group (terminal hydroxy group in the molecular chain) therefrom, where the addition product is formed by two or more molecules of the liquid-crystal polyester (A) added to and linked through one or more molecules of the compound (B) (the compound represented by Formula (ii)). In Formula (2), X³ and X⁴, Y³ and Y⁴, and n3 and n4 are as defined in Formula (ii).

In an embodiment, the liquid-crystal polyester (A) contains hydroxy or acyloxy as the addition-reactive group (a), and the compound represented by Formula (iii) is used as the compound (B). In this embodiment, the adduct between the liquid-crystal polyester (A) and the compound (B) is represented by Formula (3):

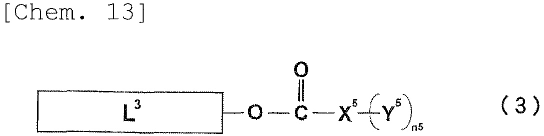

In Formula (3), L³ represents a liquid-crystal polyester skeleton. The liquid-crystal polyester skeleton is represented by a skeleton corresponding to the liquid-crystal polyester (A), except for removing one hydroxy group (terminal hydroxy group in the molecular chain) or one acyloxy group (terminal acyloxy group in the molecular chain) therefrom; and a skeleton corresponding to an addition product, except for removing one hydroxy group

(terminal hydroxy group in the molecular chain) or one acyloxy group (terminal acyloxy group in the molecular chain) therefrom, where the addition product is formed by two or more molecules of the liquid-crystal polyester (A) added to and linked through one or more molecules of the compound (B) (the compound represented by Formula (iii)).

In Formula (3), X⁵, Y⁵, and n5 are as defined in Formula (iii).

In an embodiment, the liquid-crystal polyester (A) contains hydroxy as the addition-reactive group, and the compound represented by Formula (iv) is used as the compound (B). In this embodiment, the adduct between the liquid-crystal polyester (A) and the compound (B) is represented by Formula (4) or Formula (5):

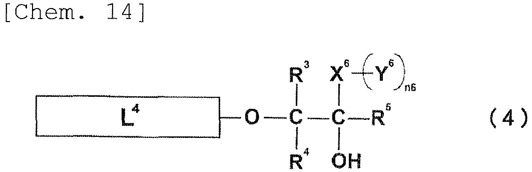

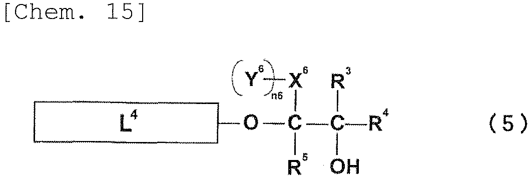

In Formula (4) and Formula (5), L⁴ independently represents a liquid-crystal polyester skeleton. The liquid-crystal polyester skeleton is represented by a skeleton corresponding to the liquid-crystal polyester (A), except for removing one hydroxy group (terminal hydroxy group in the molecular chain) therefrom; and a skeleton corresponding to an addition product, except for removing one hydroxy group (terminal hydroxy group in the molecular chain) therefrom, where the addition product is formed by two or more molecules of the liquid-crystal polyester (A) added to and linked through one or more molecules of the compound (B) (the compound represented by Formula (iv)). In Formula (4) and Formula (5), X⁶, Y⁶, R³ to R⁵, and n6 are as defined in Formula (iv).

The thermosetting liquid-crystal polyester composition according to the present invention may contain an inorganic filler. The thermosetting liquid-crystal polyester composition, when containing the inorganic filler, can allow the cured product to have performance as controlled depending on the purpose (intended use). The inorganic filler may be selected from known or common inorganic fillers and exemplified by, but not limited to, oxides including silica (e.g., natural silica and synthetic silica), aluminum oxides (e.g., α-alumina), titanium oxides, zirconium oxide, magnesium oxide, cerium oxides, yttrium oxide, calcium oxide, zinc oxide, and iron oxides; carbonates such as calcium carbonate and magnesium carbonate; sulfates such as barium sulfate, aluminum sulfate, and calcium sulfate; nitrides such as aluminum nitride, silicon nitride, titanium nitride, and boron nitride; hydroxides such as calcium hydroxide, aluminum hydroxide, and magnesium hydroxide; mica, talc, kaolin, kaolin clay, kaolinite, halloysite, pyrophyllite, montmorillonite, sericite, amesite, bentonite, asbestos, wollastonite, sepiolite, xonotlite, zeolite, hydrotalcite, fly ash, dewatered sludge, glass, diatomaceous earth, silica sand, carbon black, magnetic powders (e.g., sendust, alnico magnet, and various ferrites), hydrated gypsum, alum, antimony trioxide, magnesium oxysulfate, silicon carbide, potassium titanate, calcium silicate, magnesium silicate, aluminum silicate, magnesium phosphate, copper, and iron. The inorganic filler may have any of structures such as solid, hollow, and porous structures. The inorganic filler may have undergone a surface treatment with a known surface-treatment agent. The surface-treatment agent is exemplified by organosilicon compounds such as organohalosilanes, organoalkoxysilanes, and organosilazanes. The thermosetting liquid-crystal polyester composition according to the present invention may employ each of different inorganic fillers alone or in combination. In particular, when to be used as a semiconductor encapsulant, the thermosetting liquid-crystal polyester composition according to the present invention preferably employs, for example, silica (silica filler); and, when to give a cured product having controlled thermal conductivity and heat dissipation properties, preferably employs, for example, alumina (fine alumina particles).

The thermosetting liquid-crystal polyester composition according to the present invention may contain the inorganic filler in a content not critical, but preferably from 0 to 500 parts by weight, and more preferably from 0 to 300 parts by weight, per 100 parts by weight of the total amount of the liquid-crystal polyester (A) and the compound (B) constituting the thermosetting liquid-crystal polyester composition. The phrase "the total amount of the liquid-crystal polyester (A) and the compound (B) constituting the thermosetting liquid-crystal polyester composition" includes not only the amounts of the liquid-crystal polyester (A) and the compound (B) present in the thermosetting liquid-crystal polyester composition, but also the amounts of the liquid-crystal polyester (A) and the compound (B) constituting the adduct. The same is also true for other descriptions than the description in this paragraph.

The inorganic filler may be incorporated into the thermosetting liquid-crystal polyester composition according to the present invention upon or after the preparation of the composition. The "preparation" refers to the melt blending of the liquid-crystal polyester (A) and the compound (B).

The thermosetting liquid-crystal polyester composition according to the present invention may include an additive for the acceleration or control of the curing reaction. The additive is exemplified by, but not limited to, diamino compounds such as diaminodiphenylmethane; diallyl compounds such as diallylbisphenol-A; and triazines such as 1,3,5-tri-2-propenyl-1,3,5-triazine-2,4,6(1H,3H,5H)-trione, 1,3,5-tris(2-methyl-2-propenyl)-1,3,5-triazine-2,4,6(1H,3H,5H)-trione, and 1,3,5-tris(2,3-epoxypropyl)-1,3,5-triazine-2,4,6(1H,3H,5H)-trione. The composition may include each of different additives alone or in combination.

The thermosetting liquid-crystal polyester composition may contain the additive in a content (blending amount) not critical, but preferably from 0 to 30 parts by weight, and more preferably from 1 to 20 parts by weight, per 100 parts by weight of the total amount of the liquid-crystal polyester (A) and the compound (B) constituting the thermosetting liquid-crystal polyester composition.

The additive may be incorporated into the thermosetting liquid-crystal polyester composition according to the present invention upon or after the preparation of the composition. The "preparation" refers to the melt blending of the liquid-crystal polyester (A) and the compound (B).

The thermosetting liquid-crystal polyester composition according to the present invention may include one or more other additives within ranges not adversely affecting advantageous effects of the present invention. The other additives may be selected from among known or common additives and exemplified by, but not limited to, common additives including organic resins such as silicone resins, epoxy resins, and fluorocarbon resins; solvents; stabilizers such as antioxidants, ultraviolet absorbers, photostabilizers, and thermal stabilizers; flame retardants such as phosphorus flame retardants, halogen flame retardants, and inorganic flame retardants; flame retardant promotors; reinforcing agents (reinforcing materials); nucleating agents; coupling agents; lubricants; waxes; plasticizers; mold-release agents; impact modifiers; hue modifiers; flow improvers; colorants such as dyestuffs and pigments; dispersing agents; antifoaming agents; defoaming agents; antimicrobial agents; antiseptic agents (preservatives); viscosity modifiers; and thickeners. The composition may include each of different other additives alone or in combination. The thermosetting liquid-crystal polyester composition may contain the other additive(s) in a content not critical, but preferably from 0 to 5 percent by weight, and more preferably from 0 to 2 percent by weight, based on the total amount (100 percent by weight) of the composition. The other additive(s) may be incorporated into the thermosetting liquid-crystal polyester composition according to the present invention upon or after the preparation of the composition. The "preparation" refers to the melt blending of the liquid-crystal polyester (A) and the compound (B).

As is described above, the thermosetting liquid-crystal polyester composition according to the present invention is a thermosetting composition produced by melt-blending the liquid-crystal polyester (A) and the compound (B) with each other. The present invention is based on a design concept as follows, as one of featuring design concepts. Specifically, there are employed the liquid-crystal polyester (A) containing an addition-reactive group (a) at an end of the molecular chain, and the compound (B) containing an addition-reactive group (b) and a thermally polymerizable functional group in the molecule. The liquid-crystal polyester (A) and the compound (B) are selected so that, upon the melt blending of the two components, the reaction between the addition-reactive group (a) of the liquid-crystal polyester (A) and the addition-reactive group (b) of the compound (B) mainly proceeds, but the reaction between the thermally polymerizable functional groups of the compound (B) with each other does not approximately proceed. Based on this, the easy and simple operation of melt blending can easily give a composition having thermosetting ability (thermosetting composition). The resulting thermosetting composition can be cured at a relatively low temperature typically of 250°C or lower to form a cured product that excels in various properties including heat resistance.

### Cured Product

The thermosetting liquid-crystal polyester composition according to the present invention, when heated to be cured (to allow the curing reaction to proceed), gives a cured product. The resulting cured product is also referred to as "cured product according to the present invention". The heating mainly allows the reaction (polymerization reaction) between the thermally polymerizable functional groups with each other, where the thermally polymerizable functional groups are derived from the compound (B), to form the cured product. The heating may be performed using any of known or common processes or devices without limitation.

The heating to cure the thermosetting liquid-crystal polyester composition according to the present invention may be performed at a temperature (curing temperature) not critical, but preferably from 170°C to 250°C, more preferably from 210°C to 250°C, and furthermore preferably from 220°C to 250°C. The heating (curing), if performed at a temperature of lower than 170°C, may cause the curing reaction to proceed insufficiently to cause the cured product to have properties at insufficient levels. In contrast, the heating (curing), if performed at a temperature of higher than 250°C, may require a complicated process to form the cured product and cause the cured product to be produced with inferior productivity. The curing temperature may be controlled so as to be constant, or to vary stepwise or continuously during the curing.

The heating to cure the thermosetting liquid-crystal polyester composition according to the present invention may be performed for a time (curing time) not critical, but preferably from 3 to 600 minutes, more preferably from 5 to 480 minutes, and furthermore preferably from 5 to 360 minutes. The heating (curing), if performed for a time shorter than 3 minutes, may cause the curing reaction to proceed insufficiently to cause the cured product to have properties at insufficient levels. In contrast, the heating (curing), if performed for a time longer than 600 minutes, may cause the cured product to be produced with inferior productivity.

The curing of the thermosetting liquid-crystal polyester composition according to the present invention may be performed at normal atmospheric pressure, under reduced pressure, or under pressure (pressurizing). The curing may be performed in one step or in multiple batches of two or more steps.

The cured product according to the present invention may have a 5% weight loss temperature (T_{d5}) not critical, but preferably 350°C or higher (e.g., from 350°C to 500°C), more preferably 380°C or higher, and furthermore preferably 400°C or higher, where the 5% weight loss temperature is measured in the air at a rate of temperature rise of 10°C per minute. The cured product, if having a 5% weight loss temperature of lower than 350°C, may offer insufficient heat resistance in some uses. The 5% weight loss temperature may be measured typically by simultaneous thermogravimetry/differential thermal analysis (TG/DTA).

The cured product according to the present invention may have an activation energy for a thermal decomposition reaction in the air not critical, but preferably 150 kJ/mol or more (e.g., from 150 to 350 kJ/mol), more preferably 180 kJ/mol or more, and furthermore preferably 200 kJ/mol or more. The cured product, if having an activation energy of less than 150 kJ/mol, may offer insufficient heat resistance in some uses. The activation energy can be calculated typically by the Ozawa method. In the Ozawa method, thermogravimetric measurement (TG measurement) is performed three or more different rates of temperature rise to determine thermogravimetric losses, and based on these data, the activation energy for the thermal decomposition reaction is calculated.

The cured product according to the present invention is a cured product obtained by curing the thermosetting liquid-crystal polyester composition according to the present invention. The cured product therefore has excellent heat resistance and also offers excellent workability and dimensional stability, low linear expansion, high thermal conductivity, low hygroscopicity, and excellent dielectric properties. The cured product according to the present invention is obtained by heating any of the thermosetting liquid-crystal polyester compositions according to the present invention at a relatively low temperature of 250°C or lower. This allows the cured product to be produced with excellent productivity.

The cured product according to the present invention is usable in a variety of uses such as various members (components) and structural materials. In particular, the cured product, as being excellent in various properties as mentioned above, is preferably usable in uses such as films, prepregs, printed circuit boards, and semiconductor encapsulants. Specifically, the thermosetting liquid-crystal polyester compositions according to the present invention are preferably usable particularly as thermosetting compositions for films, for prepregs, for printed circuit boards, and for semiconductor encapsulants. Examples

The present invention will be illustrated in further detail with reference to several examples below. It should be noted, however, that the examples are by no means intended to limit the scope of the present invention.

### Melting Point and Glass Transition Temperature

The melting point (Tm) and glass transition temperature (Tg) of each of liquid-crystal polyesters obtained in production examples below were measured using a differential scanning calorimeter (DSC 6200, supplied by SII NanoTechnology Inc.) at a rate of temperature rise of 20°C per minute in a nitrogen stream. Results are given in Table 1.

### Thermal Weight Loss

The 5% weight loss temperature (T_{d5}) of each of cured products obtained in the examples was measured using a TG/DTA (TG/DTA 6300, supplied by SII NanoTechnology Inc.) at a rate of temperature rise of 10°C per minute in the air. Results are given in Table 2.

### Anisotropy in Melting

Whether the liquid-crystal polyesters prepared in the production examples each had liquid crystallinity was verified by a procedure as follows. The verification was performed using such a phenomenon that, if an isotropic melt is placed between crossed polarizers, light does not pass therethrough; but, if an optically anisotropic melt (liquid-crystal polymer) is placed between the crossed polarizers, light passes therethrough.

Each of the liquid-crystal polyesters obtained in the production examples was placed and melted on a hot stage (supplied by Mettler-Toledo International Inc.) and was observed at 250-fold magnification using a polarizing microscope (supplied by Leica Microsystems GmbH). Results demonstrated that the melts of the liquid-crystal polyesters prepared in the production examples each had liquid crystallinity.

### Production Example 1

### Production of Liquid-Crystal Polyester "a" (Decamer)

With reference to Table 1, materials were prepared as 94.3 g (0.682 mol) of 4-hydroxybenzoic acid, 102.7 g (0.546 mol) of 6-hydroxy-2-naphthoic acid, 25.4 g (0.136 mol) of 4,4'-dihydroxybiphenyl, 156.3 g (1.53 mol) of acetic anhydride, and 10.0 mg (0.10 mol) of potassium acetate. The materials were placed in a 500-mL flask equipped with a condenser and a stirrer, gradually raised in temperature up to 140°C in a nitrogen atmosphere, subjected to a reaction (acetylation reaction) for 3 hours while holding the temperature at 140°C, followed by the completion of acetylation. Next, the mixture was raised in temperature up to 340°C at a rate of 0.8°C per minute to distill off acetic acid and unreacted acetic anhydride. The inside of the flask was then gradually decompressed down to 1 Torr to distill off a volatile component and thereby yielded a liquid-crystal polyester "a". The liquid-crystal polyester "a" included a molecular chain containing aromatic units alone, and hydroxy at both ends of the molecular chain. The "aromatic unit" refers to a constitutional unit derived from an aromatic compound. The resulting liquid-crystal polyester "a" was subjected to thermal analyses [glass transition temperature (Tg) and melting point (Tm)] to offer results given in Table 1. The liquid-crystal polyester "a" was further subjected to calculation of the number of terminals and to GPC measurement and was estimated as a decamer derived from monomers. The number of terminals was calculated by HPLC after decomposition with an amine, as described in JP-A No. H05-271394.

### Production Example 2

### Production of Liquid-Crystal Polyester "b" (Pentamer)

The procedure of Production Example 1 was performed, except for using 4-hydroxybenzoic acid in an amount of 81.4 g (0.589 mol), 6-hydroxy-2-naphthoic acid in an amount of 88.9 g (0.472 mol), 4,4'-dihydroxybiphenyl in an amount of 49.4 g (0.265 mol), acetic anhydride in an amount of 165.8 g (1.62 mol), and potassium acetate in an amount of 10.0 mg (0.10 mol), as given in Table 1. This yielded a liquid-crystal polyester "b" including a molecular chain containing aromatic units (constitutional units derived from aromatic compounds) alone, and hydroxy at both ends of the molecular chain. The resulting liquid-crystal polyester "b" was thermally analyzed to offer results given in Table 1. The liquid-crystal polyester "b" was further subjected to calculation of the number of terminals and to GPC measurement and was estimated as a pentamer derived from monomers. The number of terminals was calculated by HPLC after decomposition with an amine, as described in JP-A No. H05-271394.

### Production Example 3

### Production of Liquid-Crystal Polyester "c" (Icosamer)

The procedure of Production Example 1 was performed, except for using 4-hydroxybenzoic acid in an amount of 100.9 g (0.731 mol), 6-hydroxy-2-naphthoic acid in an amount of 110.0 g (0.585 mol), 4,4'-dihydroxybiphenyl in an amount of 12.9 g (0.069 mol), acetic anhydride in an amount of 151.4 g (1.48 mol), and potassium acetate in an amount of 10.0 mg (0.10 mol), as given in Table 1. This yielded a liquid-crystal polyester "c" including a molecular chain containing aromatic units (constitutional units derived from aromatic compounds) alone, and hydroxy at both ends of the molecular chain. The liquid-crystal polyester "c" was thermally analyzed to offer results given in Table 1. The liquid-crystal polyester "c" was further subjected to calculation of the number of terminals and to GPC measurement and was estimated as an icosamer derived from monomers. The number of terminals was calculated by HPLC after decomposition with an amine, as described in JP-A No. H05-271394. [Table 1]

**TABLE 1**

| | | Charged amount of monomer | | | Thermal analyses | |
|---|---|---|---|---|---|---|
| | | HBA | HNA | BP | Tg | Tm |
| Production Example 1 | Liquid-crystal polyester "a" | 94.3 g | 102.7 g | 25.4 g | 69.6°C | 164.1°C |
| Production Example 2 | Liquid-crystal polyester "b" | 81.4 g | 88.9 g | 49.4 g | 62.8°C | ND |
| Production Example 3 | Liquid-crystal polyester "c" | 100.9 g | 110.0 g | 12.9 g | 86.7°C | 186.7°C |

| | | | | | | |
|---|---|---|---|---|---|---|
| The abbreviations in Table 1 refer to as follows: HBA: 4-Hydroxybenzoic acid HNA: 6-Hydroxy-2-naphthoic acid BP: 4,4'-Dihydroxybiphenyl | | | | | | |

### Example 1

### Production of Thermosetting Liquid-Crystal Polyester Composition and Cured Product Thereof

With reference to Table 2, 3.27 g of the liquid-crystal polyester "a" prepared in Example 1 and 1.42 g of methylenebismaleimide were melt-blended at 170°C for 6 hours and yielded a melt (thermosetting liquid-crystal polyester composition). The prepared melt was placed between a pair of glass plates, heated on a hot plate to 240°C, held at that temperature for 6 hours to allow a curing reaction to proceed, and yielded a homogeneous cured product. The cured product had a 5% weight loss temperature (T_{d5}) as given in Table 2.

### Examples 2 to 4

Thermosetting liquid-crystal polyester compositions and cured products thereof were obtained by the procedure of Example 1, except for using a liquid-crystal polyester in types and amounts given in Table 2 and using the bismaleimide compound in amounts given in Table 2. The cured products were each a homogeneous cured product. The cured products had 5% weight loss temperatures (T_{d5}) as given in Table 2.

[Table 2]

**TABLE 2**

| | Liquid-crystal polyester | | Bismaleimide compound | | Melt blending conditions | | Thermal analysis |
|---|---|---|---|---|---|---|---|
| | Type | Amount | Type | Amount | Temperature | Time | T_{d5} |
| Example 1 | Liquid-crystal polyester "a" | 3.27 g | Methylenebismaleimide | 1.42 g | 170°C | 6 hrs | 428°C |
| Example 2 | Liquid-crystal polyester "a" | 2.56 g | Methylenebismaleimide | 2.23 g | 170°C | 6 hrs | 442°C |
| Example 3 | Liquid-crystal polyester "b" | 3.47 g | Methylenebismaleimide | 2.74 g | 170°C | 6 hrs | 411°C |
| Example 4 | Liquid-crystal polyester "b" | 3.08 g | Methylenebismaleimide | 4.87 g | 170°C | 6 hrs | 434°C |

As is demonstrated in Table 2, the thermosetting liquid-crystal polyester compositions prepared in the examples could be cured (thermoset) at relatively low temperatures of 250°C or lower and gave cured products that had high 5% weight loss temperatures and offered very excellent heat resistance.

### Industrial Applicability

The thermosetting liquid-crystal polyester compositions according to the present invention, when cured, give cured products that are preferably usable in a variety of uses such as various members (components) and structural materials and, in particular, usable in uses such as films, prepregs, printed circuit boards, and semiconductor encapsulants.

## Claims

1. A thermosetting liquid-crystal polyester composition prepared by melt-blending a liquid-crystal polyester (A) and a compound (B) with each other,
the liquid-crystal polyester (A) comprising at least one of hydroxy and acyloxy at molecular chain end,
the compound (B) comprising a first functional group and a second functional group in molecule, the first functional group being reactive with the at least one of hydroxy and acyloxy, the second functional group being thermally polymerizable.

2. The thermosetting liquid-crystal polyester composition according to claim 1,
wherein the liquid-crystal polyester (A) comprises a liquid-crystal polyester, the liquid-crystal polyester comprising a constitutional unit derived from an aromatic compound monomer and having an average degree of polymerization of from 3 to 30 and a melting point of 250°C or lower.

3. The thermosetting liquid-crystal polyester composition according to one of claims 1 and 2,
the first functional group of the compound (B) being reactive with the at least one of hydroxy and acyloxy comprises at least one functional group selected from the group consisting of α,β-unsaturated carbonyl, epoxy, maleimido, ester, acid anhydride, and carboxy groups, and
wherein the second functional group of the compound (B) being thermally polymerizable comprises at least one thermally polymerizable functional group selected from the group consisting of maleimido, nadimido, phthalimido, cyanato, nitrile, phthalonitrile, styryl, ethynyl, propargyl ether, benzocyclobutene, and biphenylene groups, and substitution products or derivatives of them.

4. A thermosetting liquid-crystal polyester composition comprising at least one compound selected from the group consisting of:
compounds represented by Formula (1);
compounds represented by Formula (2);
compounds represented by Formula (3);
compounds represented by Formula (4); and
compounds represented by Formula (5): 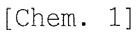 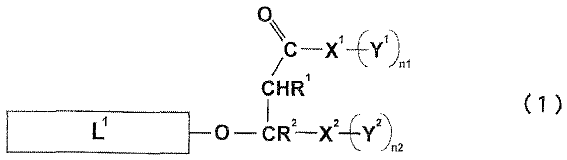 wherein L¹ represents a liquid-crystal polyester skeleton; X¹ and X² each represent, identically or differently, an organic group, where X¹ and X² may be linked to each other to form a ring with the three specified carbon atoms; R¹ and R² are each, identically or differently, selected from hydrogen and optionally substituted alkyl; Y¹ and Y² each represent,
identically or differently in each occurrence, a thermally polymerizable functional group; and n1 and n2 each represent, identically or differently, an integer of 0 or more, where the total of n1 and n2 is an integer of 1 or more, 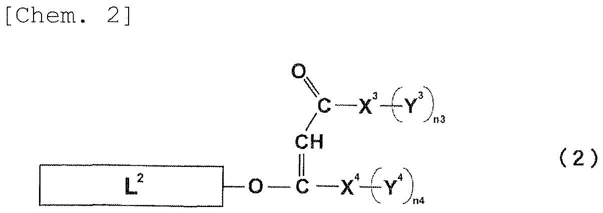 wherein L² represents a liquid-crystal polyester skeleton; X³ and X⁴ each represent, identically or differently, an organic group, where X³ and X⁴ may be linked to each other to form a ring with the three specified carbon atoms; Y³ and Y⁴ each represent, identically or differently in each occurrence, a thermally polymerizable functional group; and n3 and n4 each represent, identically or differently, an integer of 0 or more, where the total of n3 and n4 is an integer of 1 or more, 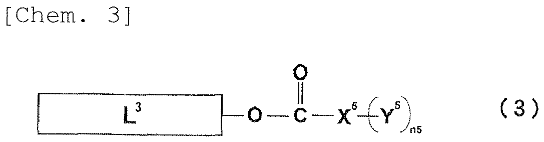 wherein L³ represents a liquid-crystal polyester skeleton; X⁵ represents an organic group; Y⁵ represents, independently in each occurrence, a thermally polymerizable functional group; and n5 represents an integer of 1 or more, 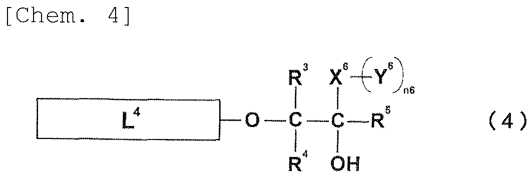 wherein L⁴ represents a liquid-crystal polyester skeleton; X⁶ represents an organic group; R³ to R⁵ are each, identically or differently, selected from hydrogen and optionally substituted alkyl; Y⁶ represents, independently in each occurrence, a thermally polymerizable functional group; and n6 represents an integer of 1 or more, 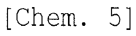 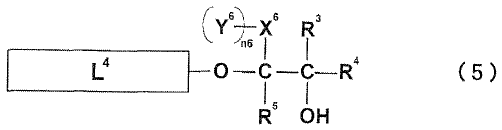 wherein L⁴, X⁶, R³ to R⁵, Y⁶, and n6 are as defined above.

5. The thermosetting liquid-crystal polyester composition according to any one of claims 1 to 4, further comprising an inorganic filler.

6. A cured product of the thermosetting liquid-crystal polyester composition according to any one of claims 1 to 5.

7. The cured product according to claim 6,
wherein the cured product has a 5% weight loss temperature of 350°C or higher as measured at a rate of temperature rise of 10°C per minute in air, and
wherein the cured product has an activation energy of 150 kJ/mol or more for a thermal decomposition reaction in air.
